# EUROPÄISCHE PATENTANMELDUNG

(11) **EP 3 252 096 A1**
(43) Veröffentlichungstag der Anmeldung: **06.12.2017**
(21) Anmeldenummer: 16172118.8
(22) Anmeldetag: 31.05.2016
(51) Int. Cl.: C08K 5/527

(54) **VERWENDUNG VON PENTAERYTHRITOL-DIPHOSPHIT-VERBINDUNGEN ZUR STABILISIERUNG VON POLYISOCYANATZUSAMMENSETZUNGEN**

(71) Anmelder: BASF SE, 67056 Ludwigshafen am Rhein (DE)
(72) Erfinder: Die Erfindernennung liegt noch nicht vor
(74) Vertreter: Herzog, Fiesser & Partner Patentanwälte PartG mbB

(57) **Zusammenfassung**

Die vorliegende Erfindung betrifft die Verwendung von Pentaerythritol-diphosphit-Verbindungen gemäß der allgemeinen Formel A zur Stabilisierung von Polyisocyanatzusammensetzungen 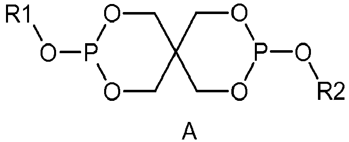 , wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und - C(=O)-NR5R6-Gruppen mit R5 und R6 unabhängig voneinander ausgewählt aus verzweigten oder unverzweigten C1- bis C10-Alkylgruppen.

Weiterhin betrifft die Erfindung eine stabilisierte Polyisocyanat-Zusammensetzung, die Verwendung einer stabilisierten Polyisocyanat-Zusammensetzung zur Herstellung von Polyurethanen, entsprechend erhaltene oder erhältliche Polyurethane, ein Verfahren zur Herstellung eines Polyurethans sowie die Verwendung entsprechend erhaltener oder erhältlicher Polyurethane.

## Beschreibung

Die vorliegende Erfindung betrifft die Verwendung von Pentaerythritol-diphosphit-Verbindungen zur Stabilisierung von Polyisocyanatzusammensetzungen, eine stabilisierte Polyisocyanat-Zusammensetzung, die Verwendung einer stabilisierten Polyisocyanat-Zusammensetzung zur Herstellung von Polyurethanen, entsprechend erhaltene oder erhältliche Polyurethane, ein Verfahren zur Herstellung eines Polyurethans sowie die Verwendung entsprechend erhaltener oder erhältlicher Polyurethane.

Polyisocyanate wie Diphenylmethandiisocyanat (MDI) oder Toluol-2,4-diisocyanat (TDI) sind wesentliche Rohstoffe für die Herstellung von Kunststoffen wie beispielsweise Polyurethanen. MDI und TDI gehören daher zu den weltweit am meisten hergestellten (Poly)lsocyanaten. Bei der Lagerung von Polyisocyanaten wie dem MDI kommt es ohne Stabilisatoren zu Verfärbungen aufgrund von beispielsweise Oxidation. Um dies zu vermeiden, werden dem Polyisocyanat üblicherweise Antioxidantien zugesetzt, wofür oftmals Substanzen eingesetzt werden, welche sterisch gehinderte Phenole und Phosphite enthalten. Bei diesen als Stabilisator verwendeten Phosphiten handelte es sich im Wesentlichen um Triphenylphosphit (TPP) oder Trisnonylphenylphosphit (TNPP). Diese beiden Produkte enthalten jedoch noch Restgehalte an Phenol oder Nonylphenol. Beide Substanzen - Phenol und Nonylphenol- sind als "SVHC" eingestuft. SVHCs (Substances of Very High Concern; besonders besorgniserregende Stoffe) sind chemische Verbindungen, welche unter der REACH-Verordnung mit besonders gefährlichen Eigenschaften identifiziert worden sind (Verordnung (EG) Nr. 1907/2006 des Europäischen Parlaments und des Rates vom 18. Dezember 2006, Amtsblatt der Europäischen Union L396, 30. Dezember 2006, S. 1-849). Dies schränkt den Einsatz von mit diesen Verbindungen stabilisierten Polyisocyanaten als Rohstoff für Produktanwendungen mit Haut- und Lebensmittelkontakt und somit im Bereich Bekleidung/Textilien und Nahrungsmittel extrem ein. Gemäß den Vorgaben der REACH-Verordnung besteht für alle Unternehmen innerhalb der EU eine unmittelbare Informationspflicht gegenüber Kunden und dem Endverbraucher sowie eine Mitteilungspflicht gegenüber der Europäische Chemikalienagentur ECHA, wenn die produzierten Waren SVHC-Substanzen in einer Menge von mehr als 0,1 Massenprozent (10 ppm) enthalten und die Gesamtmenge von einer Tonne pro Jahr überschritten wird.

Eine der vorliegenden Erfindung zugrunde liegende Aufgabe bestand daher darin, alternativ stabilisierte Polyisocyanate bereitzustellen, welche vorzugsweise keine Restgehalte an Stoffen enthalten, welche SVHCs darstellen.

Überraschend wurde gefunden, dass solche stabilisierten Polyisocyanate durch die Verwendung von Pentaerythritol-diphosphit-Verbindungen bereitgestellt werden können.

Die vorliegende Erfindung betrifft daher die Verwendung von Pentaerythritol-diphosphit-Verbindungen gemäß der allgemeinen Formel A zur Stabilisierung von Polyisocyanatzusammensetzungen 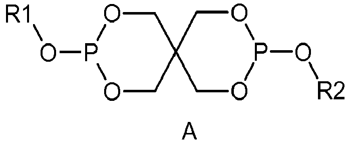 , wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und - C(=O)-NR5R6-Gruppen mit R5 und R6 unabhängig voneinander ausgewählt aus verzweigten oder unverzweigten C1- bis C10-Alkylgruppen.

Durch die Verwendung der Pentaerythritol-diphosphit-Verbindungen gemäß der allgemeinen Formel A ist es möglich, eine Stabilisierung von Polyisocyanatzusammensetzungen zu erzielen, die vergleichbar der mit beispielsweise TNPP erzielten Stabilisierung ist bzw. sogar eine verbesserte Stabilisierung zu erzielen, da im Vergleich zu TNPP geringere Mengen an Stabilisator eingesetzt werden können, um ein vergleichbares Stabilisationsergebnis zu erzielen.

Als Maß der Stabilisierung wird der zeitliche Verlauf der APHA-Hazen-Farbzahlen stabilisierter Polyisocyanat-Proben verwendet (APHA: American Public Health Association). Die APHA-Hazen-Farbzahl (Platin-Kobalt-Farbzahl, Pt/Co, kurz Hazen-Farbzahl), wird gemäß DIN EN 1557 (Prüfvorschrift PA-08-04) bestimmt, indem für kolorimetrische Proben in genormten Gefäßen unter Einsatz spektralphotometrischer Geräte die Lichtdurchlässigkeit über das gesamte Spektrum des weißen Lichtes gemessen und dokumentiert, sowie mit einer Hazen-Farbzahlskala abgeglichen, wird. Die Methode ist spezifisch für gelbliche Färbungen.

Vorzugsweise erfolgt eine initiale Bestimmung der Hazen-Farbzahl einer stabilisierten Polyisocyanat-Probe direkt nach Zugabe des Stabilisators, d.h. der mindestens einen Pentaerythritol-diphosphit-Verbindung gemäß der allgemeinen Formel A, wobei "direkt nach Zugabe" in einem Zeitfenster von 0 bis 5 Stunden meint. Der so bestimmte Wert ist der "Null-Tage-Wert". Anschließend werden zeitlich beabstandet weitere Bestimmungen der Hazen-Farbzahl durchgeführt.

Als ausreichend stabilisiert werden im Rahmen der vorliegenden Erfindung Proben, d.h. Zusammensetzungen enthaltend mindestens eine Polyisocyanatzusammensetzung und mindestens eine Pentaerythritol-diphosphit-Verbindung gemäß der allgemeinen Formel A, angesehen, die bis zu mindestens sieben Tagen, bevorzugt bis zu mindestens 2 Wochen, weiter bevorzugt bis zu vier Wochen, eine Hazen-Farbzahlaufweisen, deren Wert maximal 50 %, bevorzugt maximal 40 %, weiter bevorzugt maximal 25 %, weiter bevorzugt maximal 20 % des Wertes der Hazen-Farbzahl einer entsprechenden unstabilisierten Probe (Null-Probe) beträgt. Die Null-Probe umfasst Zusammensetzungen enthaltend mindestens eine Polyisocyanatzusammensetzung, aber keine Pentaerythritol-diphosphit-Verbindung gemäß der allgemeinen Formel A oder einen anderen Stabilisator. Null-Probe und stabilisierte Probe werden gleichzeitig hergestellt und gleich behandelt. Auftretende Veränderungen der Hazen-Farbzahl umfassen Erhöhungen, aber auch Verringerungen der Hazen-Farbzahl, d.h. der Wert der Hazen-Farbzahl kann gegenüber dem Null-Tage-Wert in Gegenwart der mindestens einen Pentaerythritol-diphosphit-Verbindung gemäß der allgemeinen Formel A auch absinken. Eine Pentaerythritol-diphosphit-Verbindung gemäß der allgemeinen Formel A wird als ausreichend effizienter Stabilisator angesehen, wenn sie in einer Zusammensetzung, die weiterhin mindestens eine Polyisocyanatzusammensetzung umfasst, für einen Zeitraum von mindestens sieben Tagen, bevorzugt bis zu mindestens 2 Wochen, weiter bevorzugt bis zu vier Wochen, eine Hazen-Farbzahl ergibt, deren Wert maximal 50 %, bevorzugt maximal 40 %, weiter bevorzugt maximal 25 %, weiter bevorzugt maximal 20 % des Wertes der Hazen-Farbzahl einer entsprechenden Null-Probe beträgt. Eine Veränderung der Hazen-Farbzahl umfasst auch hier eine Erhöhung, aber auch eine Verringerung der Hazen-Farbzahl, d.h. der Wert der Hazen-Farbzahl kann gegenüber dem Null-Tage-Wert in Gegenwart der Pentaerythritol-diphosphit-Verbindung gemäß der allgemeinen Formel A auch absinken.

Bei den Pentaerythritol-diphosphit-Verbindungen gemäß der allgemeinen Formel A, die erfindungsgemäß zur Stabilisierung von Polyisocyanatzusammensetzungen verwendet werden, umfassen die C6- bis C15-Arylgruppen der Reste R1, R2 einen oder mehrere Ringe. Mehrere Ringe sind kondensiert oder isoliert. Die C3- bis C15-Alkylgruppen der Reste R1, R2 sind verzweigt, unverzweigt oder cyclisch, wobei die Cyclen einen oder mehrere Ringe umfassen können. Bevorzugt sind die C3- bis C15-Alkylgruppen der Reste R1, R2 verzweigte oder unverzweigte Alkylgruppen.

In einer bevorzugten Ausführungsform der Verwendung von Pentaerythritol-diphosphit-Verbindungen gemäß der allgemeinen Formel A zur Stabilisierung von Polyisocyanatzusammensetzungen wie zuvor beschrieben sind die Reste R1, R2 ausgewählt aus C6- bis C10-Arylgruppen, wobei mindestens der Rest R1 mindestens einen weiteren Substituenten R3 aufweist, welcher ausgewählt ist aus verzweigten oder unverzweigten C1- bis C10-Alkylgruppen.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei die Reste R1, R2 ausgewählt sind aus C6- bis C10-Arylgruppen, wobei der Rest R1 mindestens einen weiteren Substituenten R3 und der Rest R2 mindestens einen weiteren Substituenten R4 aufweist, wobei R3, R4 jeweils unabhängig voneinander ausgewählt sind aus verzweigten oder unverzweigten C3- bis C8-Alkylgruppen.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei die Reste R1, R2 Phenylgruppen sind, wobei mindestens der Rest R1 mindestens einen weiteren Substituenten R3 aufweist, welcher ausgewählt ist aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei die Reste R1, R2 Phenylgruppen sind, wobei R1 mindestens einen weiteren Substituenten R3, und R2 mindestens einen weiteren Substituenten R4 aufweist, wobei R3, R4 gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei die Reste R1, R2 Phenylgruppen sind und wobei der Rest R1 mindestens zwei gleiche Reste R3, R3' aufweist, die sich jeweils an der Phenylgruppe R1 in ortho- und para-Position befinden, wobei die mindestens zwei gleichen Reste R3, R3' ausgewählt sind aus verzweigten C3- bis C5-Alkylgruppen, vorzugsweise ausgewählt aus der Gruppe bestehend aus *iso*-Propylgruppe, *tert-*Butylgruppe und *iso*-Pentylgruppe und wobei der Rest R2 mindestens einen Substituenten R4 aufweist, welcher Wasserstoff ist oder gleich ist zu R3.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei die Reste R1, R2 Phenylgruppen sind und wobei jeder Rest R1 mindestens zwei gleiche Reste R3, R3' und jeder Rest R2 mindestens zwei gleiche Reste R4, R4' aufweist, die sich jeweils an den Phenylgruppen R1, R2 in ortho- und para-Position befinden, wobei R3, R3', R4 und R4' gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei die Pentaerythritol-diphosphit-Verbindung gemäß der allgemeinen Formel A ausgewählt ist aus der Gruppe bestehend aus Phenyl-(2-*tert-*butylphenyl)-pentaerythritol-diphosphit, Phenyl-(4-*tert-*butylphenyl)-pentaerythritol-diphosphit, Bis-(2-*tert-*butylphenyl)-pentaerythritol-diphosphit, Bis-(4-*tert-*utylphenyl)-pentaerythritol-diphosphit, (2-*tert*-butylphenyl)-(4-*tert*-butylphenyl)-pentaerythritol-diphosphit, Phenyl-(2,4-di-*tert-*butylphenyl)-pentaerythritol-diphosphit, (2*-tert-*Butylphenyl)-(2,4-di-*tert-*butylphenyl)-pentaerythritol-diphosphit, (4*-tert-*Butylphenyl)-(2,4-di*-tert-*butylphenyl)-pentaerythritol-diphosphit, Bis-(2,4-di-*tert-*butylphenyl)-pentaerythritol-diphosphit, bevorzugt aus der Gruppe bestehend aus Bis-(2-*tert-*butylphenyl)-pentaerythritol-diphosphit, Bis-(4-*tert*-butylphenyl)-pentaerythritol-diphosphit, (2-*tert*-butyl phenyl)-(4-*tert*-butylphenyl)-pentaerythritol-diphosphit, (2-*tert-*Butylphenyl)-(2,4-di-*tert-*butylphenyl)-pentaerythritol-diphosphit, (4-*tert-*Butylphenyl)-(2,4-di-*tert-*butylphenyl)-pentaerythritol-diphosphit, Bis-(2,4-di-*tert*-butylphenyl)-pentaerythritol-diphosphit und weiter bevorzugt Bis-(2,4-di-*tert-*butylphenyl)-pentaerythritol-diphosphit (Irgafos 126) ist.

Die Pentaerythritol-diphosphit-Verbindungen der bevorzugten Gruppe Bis-(2-*tert*-butylphenyl)-pentaerythritol-diphosphit, Bis-(4-*tert*-butylphenyl)-pentaerythritol-diphosphit, (2*-tert-*butylphenyl)-(4-*tert-*butylphenyl)-pentaerythritol-diphosphit, (2-*tert-*Butylphenyl)-(2,4-di-*tert*-butyl-phenyl)-pentaerythritol-diphosphit, (4-*tert-*Butylphenyl)-(2,4-di-*tert*-butylphenyl)-pentaerythritol-diphosphit, Bis-(2,4-di-*tert-*butylphenyl)-pentaerythritol-diphosphit, insbesondere Bis-(2,4-di-*tert-*butylphenyl)-pentaerythritol-diphosphit, haben den besonderen Vorteil, dass Sie keine SVHCs sind und auch SVHCs, insbesondere Phenol oder Nonylphenol, nur in Mengen von weniger als 10ppm, bevorzugt von weniger als 1ppm, weiterbevorzugt von weniger als 0,1ppm, enthalten.

Gemäß einer weiteren Ausführungsform betrifft die Erfindung die Verwendung von Pentaerythritol-diphosphit-Verbindungen gemäß der allgemeinen Formel A zur Stabilisierung von Polyisocyanatzusammensetzungen, wie zuvor beschrieben, wobei eine einzelne Pentaerythritol-diphosphit-Verbindung gemäß der allgemeinen Formel A oder eine Mischung zweier oder mehrerer verschiedener Pentaerythritol-diphosphit-Verbindungen gemäß der allgemeinen Formel A eingesetzt wird, vorzugsweise eine einzelne Pentaerythritol-diphosphit-Verbindung gemäß der allgemeinen Formel A.

Eine Polyisocyanatzusammensetzung im Rahmen der vorliegenden Erfindung umfasst mindestens ein Polyisocyanat.

In einer bevorzugten Ausführungsform der Verwendung von Pentaerythritol-diphosphit-Verbindungen gemäß der allgemeinen Formel A zur Stabilisierung von Polyisocyanatzusammensetzungen enthält die Polyisocyanatzusammensetzung mindestens ein Polyisocyanat ausgewählt aus den Diisocyanaten, bevorzugt ausgewählt aus der Gruppe bestehend aus Isophorondiisocyanat (IPDI), Toluol-2,4-diisocyanat (TDI), 2,2'-Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldüsocyanat (H12MDI), weiter bevorzugt ausgewählt aus der Gruppe bestehend aus 2,2'-MDI, 2,4'-MDI und 4,4'-MDI; weiter bevorzugt enthält die Polyisocyanatzusammensetzung als Polyisocyanat nur 4,4'-MDI.

In einer besonders bevorzugten Ausführungsform wird Bis-(2,4-di-*tert*-butylphenyl)-pentaerythritol-diphosphit als Stabilisator für 4,4'-MDI verwendet.

### Stabilisierte Polyisocyanat-Zusammensetzung

Die Erfindung betrifft weiterhin eine stabilisierte Polyisocyanat-Zusammensetzung, enthaltend mindestens
(i) eine Polyisocyanatzusammensetzung;
(ii) mindestens eine Pentaerythritol-diphosphit-Verbindung gemäß der allgemeinen Formel A 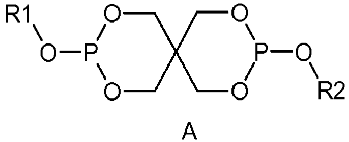
, wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und -C(=O)-NR5R6-Gruppen mit R5 und R6 unabhängig voneinander ausgewählt aus verzweigten oder unverzweigten C1- bis C10-Alkylgruppen.

Gemäß einer Ausführungsform betrifft die Erfindung eine stabilisierte Polyisocyanat-Zusammensetzung wie oben beschrieben, wobei die Polyisocyanatzusammensetzung (i) mindestens ein Polyisocyanat ausgewählt aus den Diisocyanaten, bevorzugt ausgewählt aus der Gruppe bestehend aus Isophorondiisocyanat (IPDI), Toluol-2,4-diisocyanat (TDI), 2,2'-Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldüsocyanat (H12MDI), weiter bevorzugt ausgewählt aus der Gruppe bestehend aus 2,2'-MDI, 2,4'-MDI und 4,4'-MDI, enthält; und weiter bevorzugt die Polyisocyanatzusammensetzung (i) als Polyisocyanat nur 4,4'-MDI enthält.

Stabilisierte Polyisocyanat-Zusammensetzungen werden durch Vermischen der Einzelkomponenten erzeugt. In einer bevorzugten Ausführungsform wird die Polyisocyanatzusammensetzung (i) hierfür auf eine Temperatur im Bereich von 10 bis 80 °C, bevorzugt im Bereich von 30 bis 70 °C, weiter bevorzugt im Bereich von 40 bis 60°C, weiter bevorzugt im Bereich von 45 bis 55 °C eingestellt. In einer weiter bevorzugten Ausführungsform erfolgt das Vermischen aller Komponenten bei einer Temperatur im Bereich von 10 bis 80 °C, bevorzugt im Bereich von 30 bis 70 °C, weiter bevorzugt im Bereich von 40 bis 60°C, weiter bevorzugt im Bereich von 45 bis 55 °C.

Durch die Verwendung der mindestens einen Pentaerythritol-diphosphit-Verbindung gemäß der allgemeinen Formel A ist es möglich, eine Stabilisierung von Polyisocyanatzusammensetzungen zu erzielen, die vergleichbar der mit beispielsweise TNPP erzielten Stabilisierung ist bzw. sogar eine verbesserte Stabilisierung zu erzielen, da im Vergleich zu TNPP geringere Mengen an Stabilisator eingesetzt werden können, um ein vergleichbares Stabilisationsergebnis zu erzielen. Vorteilhaft hierbei ist weiterhin, dass keine SVHCs wie Nonylphenol in der stabilisierten Polyisocyanatzusammensetzung enthalten sind. Somit eröffnet sich eine weite Palette an Anwendungsmöglichkeiten.

Als ausreichend stabilisiert werden im Rahmen der vorliegenden Erfindung Proben, d.h. stabilisierte Polyisocyanat-Zusammensetzungen enthaltend mindestens eine Polyisocyanatzusammensetzung (i) und mindestens eine Pentaerythritol-diphosphit-Verbindung (ii) gemäß der allgemeinen Formel A, angesehen, die bis zu mindestens sieben Tagen, bevorzugt bis zu mindestens 2 Wochen, weiter bevorzugt bis zu vier Wochen, eine Hazen-Farbzahl ergeben, deren Wert maximal 50 %, bevorzugt maximal 40 %, weiter bevorzugt maximal 25 %, weiter bevorzugt maximal 20 % des Wertes der Hazen-Farbzahl einer entsprechenden unstabilisierten Probe (Null-Probe) beträgt. Null-Probe und stabilisierte Probe werden gleichzeitig hergestellt und gleich behandelt. Auftretende Veränderungen der Hazen-Farbzahl umfassen Erhöhungen, aber auch Verringerungen der Hazen-Farbzahl, d.h. der Wert der Hazen-Farbzahl kann gegenüber dem Null-Tage-Wert in Gegenwart der mindestens einen Pentaerythritol-diphosphit-Verbindung gemäß der allgemeinen Formel A auch absinken. Der Null-Tage-Wert wird bestimmt, indem die Hazen-Farbzahl einer -Probe direkt nach Zugabe des Stabilisators, d.h. der mindestens einen Pentaerythritol-diphosphit-Verbindung (ii) gemäß der allgemeinen Formel A, bestimmt wird, wobei "direkt nach Zugabe" in einem Zeitfenster von 0 bis 5 Stunden meint. Eine Veränderung der Hazen-Farbzahl gegenüber dem Null-Tage-Wert umfasst eine Erhöhung, aber auch Verringerungen der Hazen-Farbzahl, d.h. der zu einem bestimmten Zeitpunkt bestimmte Wert der Hazen-Farbzahl kann in Gegenwart der mindestens einen Pentaerythritol-diphosphit-Verbindung (ii) gemäß der allgemeinen Formel A gegenüber dem Null-Tage-Wert auch absinken.

Hinsichtlich der mindestens einen Pentaerythritol-diphosphit-Verbindung (ii) gemäß der allgemeinen Formel A umfassen die C6- bis C15-Arylgruppen der Reste R1, R2 einen oder mehrere Ringe. Mehrere Ringe sind kondensiert oder isoliert. Die C3- bis C15-Alkylgruppen der Reste R1, R2 der mindestens einen Pentaerythritol-diphosphit-Verbindung (ii) gemäß der allgemeinen Formel A sind verzweigt, unverzweigt, oder cyclisch, wobei die Cyclen einen oder mehrere Ringe umfassen können. Bevorzugt sind die C3- bis C15-Alkylgruppen der Reste R1, R2 verzweigte oder unverzweigte Alkylgruppen.

In einer bevorzugten Ausführungsform der stabilisierten Polyisocyanat-Zusammensetzung wie zuvor beschrieben sind die Reste R1, R2 der mindestens einen Pentaerythritol-diphosphit-Verbindung (ii) gemäß der allgemeinen Formel A ausgewählt aus C6- bis C10-Arylgruppen, wobei mindestens der Rest R1 mindestens einen weiteren Substituenten R3 aufweist, welcher ausgewählt ist aus verzweigten oder unverzweigten C1- bis C10-Alkylgruppen.

Gemäß einer weiteren Ausführungsform betrifft die Erfindung eine stabilisierte Polyisocyanat-Zusammensetzung wie zuvor beschrieben, wobei die Reste R1, R2 der mindestens einen Pentaerythritol-diphosphit-Verbindung (ii) gemäß der allgemeinen Formel A ausgewählt sind aus C6- bis C10-Arylgruppen, wobei der Rest R1 mindestens einen weiteren Substituenten R3 und der Rest R2 mindestens einen weiteren Substituenten R4 aufweist, wobei R3, R4 jeweils unabhängig voneinander ausgewählt sind aus verzweigten oder unverzweigten C3- bis C8-Alkylgruppen.

Gemäß einer weiteren Ausführungsform betrifft die Erfindung eine stabilisierte Polyisocyanat-Zusammensetzung wie zuvor beschrieben, wobei die Reste R1, R2 der mindestens einen Pentaerythritol-diphosphit-Verbindung (ii) gemäß der allgemeinen Formel A Phenylgruppen sind, wobei mindestens der Rest R1 mindestens einen weiteren Substituenten R3 aufweist, welcher ausgewählt ist aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.

Gemäß einer weiteren Ausführungsform betrifft die Erfindung eine stabilisierte Polyisocyanat-Zusammensetzung wie zuvor beschrieben, wobei die Reste R1, R2 der mindestens einen Pentaerythritol-diphosphit-Verbindung (ii) gemäß der allgemeinen Formel A Phenylgruppen sind, wobei R1 mindestens einen weiteren Substituenten R3, und R2 mindestens einen weiteren Substituenten R4 aufweist, wobei R3, R4 gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.

Gemäß einer weiteren Ausführungsform betrifft die Erfindung eine stabilisierte Polyisocyanat-Zusammensetzung wie zuvor beschrieben, wobei die Reste R1, R2 der mindestens einen Pentaerythritol-diphosphit-Verbindung (ii) gemäß der allgemeinen Formel A Phenylgruppen sind und wobei der Rest R1 mindestens zwei gleiche Reste R3, R3'' aufweist, die sich jeweils an der Phenylgruppe R1 in ortho- und para-Position befinden, wobei die mindestens zwei gleichen Reste R3, R3'ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe und wobei der Rest R2 mindestens einen Substituenten R4 aufweist, welcher Wasserstoff ist oder gleich ist zu R3.

Gemäß einer weiteren Ausführungsform betrifft die Erfindung eine stabilisierte Polyisocyanat-Zusammensetzung wie zuvor beschrieben, wobei die Reste R1, R2 der mindestens einen Pentaerythritol-diphosphit-Verbindung (ii) gemäß der allgemeinen Formel A Phenylgruppen sind und wobei jeder Rest R1 mindestens zwei gleiche Reste R3, R3' und jeder Rest R2 mindestens zwei gleiche Reste R4, R4' aufweist, die sich jeweils an den Phenylgruppen R1, R2 in ortho-und para-Position befinden, wobei R3, R3', R4 und R4' gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.

Gemäß einer weiteren Ausführungsform betrifft die Erfindung eine stabilisierte Polyisocyanat-Zusammensetzung wie zuvor beschrieben, wobei die mindestens eine Pentaerythritol-diphosphit-Verbindung (ii) gemäß der allgemeinen Formel A ausgewählt ist aus der Gruppe bestehend aus Phenyl-(2-*tert-*butylphenyl)-pentaerythritol-diphosphit, Phenyl-(4-*tert-*butylphenyl)-pentaerythritol-diphosphit, Bis-(2-*tert-*butylphenyl)-pentaerythritol-diphosphit, Bis-(4-*tert*-butytphenyt)-pentaerythritot-diphosphit, (2-*tert*-butylphenyl)-(4-*tert*-butylphenyl)-pentaerythritol-diphosphit, Phenyl-(2,4-di-*tert-*butylphenyl)-pentaerythritol-diphosphit, (2*-tert-*Butylphenyl)-(2,4-di-*tert-*butylphenyl)-pentaerythritol-diphosphit, (4-*tert-*Butylphenyl)-(2,4-di-*tert-*butylphenyl)-pentaerythritol-diphosphit, Bis-(2,4-di-*tert-*butylphenyl)-pentaerythritol-diphosphit, vorzugsweise aus der Gruppe bestehend aus Bis-(2-*tert*-butylphenyl)-pentaerythritol-diphosphit, Bis-(4-*tert*-butylphenyl)-pentaerythritol-diphosphit, (2-*tert*-butylphenyl)-(4-*tert*-butylphenyl)-pentaerythritol-diphosphit, (2-*tert*-Butylphenyl)-(2,4-di-*tert*-butylphenyl)-pentaerythritol-diphosphit, (4-*tert*-Butylphenyl)-(2,4-di-*tert-*butylphenyl)-pentaerythritol-diphosphit, Bis-(2,4-di-*tert-*butylphenyl)-pentaerythritol-diphosphit und vorzugsweise Bis-(2,4-di-*tert*-butylphenyl)-pentaerythritol-diphosphit (Irgafos 126) ist. Die Pentaerythritol-diphosphit-Verbindungen der bevorzugten Gruppe, insbesondere Irgafos 126, haben den besonderen Vorteil, dass Sie keine SVHCs sind und auch SVHCs, insbesondere Phenol oder Nonylphenol, nur in Mengen von weniger als 10ppm, bevorzugt von weniger als 1 pmm, weiter bevorzugt von weniger als 0,1 ppm, enthalten

Gemäß einer weiteren Ausführungsform betrifft die Erfindung eine stabilisierte Polyisocyanat-Zusammensetzung wie zuvor beschrieben, wobei eine einzelne Pentaerythritol-diphosphit-Verbindung (ii) gemäß der allgemeinen Formel A oder eine Mischung zweier oder mehrerer verschiedener Pentaerythritol-diphosphit-Verbindungen (ii) gemäß der allgemeinen Formel A enthalten ist, vorzugsweise eine einzelne Pentaerythritol-diphosphit-Verbindung (ii) gemäß der allgemeinen Formel A. In einer besonders bevorzugten Ausführungsform enthält die stabilisierte Polyisocyanat-Zusammensetzung Irgafos 126 als Stabilisator und 4,4'-MDI als Polyisocyanat.

In einer bevorzugten Ausführungsform enthält die stabilisierte Polyisocyanat-Zusammensetzung wie zuvor beschrieben zusätzlich eine Zusammensetzung primärer Antioxidantien (iii), welche mindestens ein Antioxidans, ausgewählt aus sterisch gehinderten Phenolen, bevorzugt ausgewählt aus den sterisch gehinderten Phenolen, welche mindestens in ortho-Position benachbart zur OH-Gruppe eine *tert-*Butylgruppe aufweisen, weiter bevorzugt ausgewählt aus der Gruppe bestehend aus Ethylenbis(oxyethylen)bis-(3-(5-*tert-*butyl-4-hydroxy-m-tolyl)-propionat) (Irganox 245 FF, CAS-Nummer 36443-68-2), Octadecyl-3-(3,5-di-*tert-*butyl-4-hydroxyphenyl)-propionat (Irganox 1076, CAS-Nummer 2082-79-3), Octyl-3,5-di-*tert-*butyl-4-hydroxy-hydrocinnamat (Irganox 1135, CAS-Nummer 125643-61-0), N,N'-Hexan-1,6-diylbis[3-(3,5-di-*tert-*butyl-4-hydroxyphenylpropionamid] (Irganox 1098, CAS-Nummer 23128-74-7), Pentaerythritol tetrakis(3-(3,5-di-*tert-*butyl-4-hydroxyphenyl)propionat) (Irganox 1010, CAS-Nummer 6683-19-8), 3,5-Bis(*tert*-butyl)-4-hydroxytoluol (BHT, CAS-Nummer 128-37-0), enthält; und weiter bevorzugt enthält die Zusammensetzung primärer Antioxidantien (iii) als Antioxidans nur BHT.

In einer bevorzugten Ausführungsform besteht die stabilisierte Polyisocyanat-Zusammensetzung wie zuvor beschrieben zu 98 Gewichts-%, bevorzugt zu 99 Gewichts-%, weiter bevorzugt zu 99,5 Gewichts-%, weiter bevorzugt zu 99,9 Gewichts-%, aus den folgenden Komponenten: der Polyisocyanatzusammensetzung (i); mindestens einer Pentaerythritol-diphosphit-Verbindung (ii) gemäß der allgemeinen Formel A; und der Zusammensetzung primärer Antioxidantien (iii).

Gemäß einer weiteren Ausführungsform enthält die stabilisierte Polyisocyanat-Zusammensetzung wie zuvor beschrieben die mindestens eine Pentaerythritol-diphosphit-Verbindung (ii) gemäß der allgemeinen Formel A in einer Menge im Bereich von 1 bis 2000 ppm, bevorzugt in einer Menge im Bereich von 1 bis 1000 ppm, weiter bevorzugt in einer Menge im Bereich von 100 bis 800 ppm, weiter bevorzugt in einer Menge im Bereich von 500 bis 700 ppm, bezogen auf das Gesamtgewicht der Polyisocyanatzusammensetzung (i).

Gemäß einer weiteren Ausführungsform enthält die stabilisierte Polyisocyanat-Zusammensetzung wie zuvor beschrieben die Zusammensetzung primärer Antioxidantien (iii) in einer Menge von 1 bis 2000 ppm, bevorzugt in einer Menge von 1 bis 1000 ppm, weiter bevorzugt in einer Menge im Bereich von 100 bis 800 ppm, weiter bevorzugt in einer Menge im Bereich von 500 bis 700 ppm, bezogen auf das Gesamtgewicht der Polyisocyanatzusammensetzung (i).

In einer bevorzugten Ausführungsform der stabilisierten Polyisocyanat-Zusammensetzung wie zuvor beschrieben enthält die Polyisocyanatzusammensetzung (i) 4,4'-MDI; die Pentaerythritol-diphosphit-Verbindung (ii) gemäß der allgemeinen Formel A ist Bis-(2,4-di-*tert*-butylphenyl)-pentaerythritol-diphosphit; und die Zusammensetzung primärer Antioxidantien (iii) enthält 3,5-Bis(*tert-*butyl)-4-hydroxytoluol (BHT).

In einer bevorzugten Ausführungsform der stabilisierten Polyisocyanat-Zusammensetzung wie zuvor beschrieben enthält die Polyisocyanatzusammensetzung (i) als Polyisocyanat nur 4,4'-MDI; die mindestens eine Pentaerythritol-diphosphit-Verbindung (ii) gemäß der allgemeinen Formel A ist Bis-(2,4-di-*tert*-butylphenyl)-pentaerythritol-diphosphit, welches in einer Menge im Bereich von 1 bis 2000 ppm, bevorzugt in einer Menge im Bereich von 1 bis 1000 ppm, weiter bevorzugt in einer Menge im Bereich von 100 bis 800 ppm, weiter bevorzugt in einer Menge im Bereich von 500 bis 700 ppm, bezogen auf das Gesamtgewicht der Polyisocyanatzusammensetzung (i) enthalten ist; und die Zusammensetzung primärer Antioxidantien (iii) enthält als Antioxidans nur BHT, welches in einer Menge von 1 bis 2000 ppm, bevorzugt in einer Menge von 1 bis 1000 ppm, weiter bevorzugt in einer Menge im Bereich von 100 bis 800 ppm, weiter bevorzugt in einer Menge im Bereich von 500 bis 700 ppm, bezogen auf das das Gesamtgewicht der Polyisocyanatzusammensetzung (i), enthalten ist.

In einer bevorzugten Ausführungsform der stabilisierten Polyisocyanat-Zusammensetzung wie zuvor beschrieben enthält die Polyisocyanatzusammensetzung (i) als Polyisocyanat nur 4,4'-MDI; die mindestens eine Pentaerythritol-diphosphit-Verbindung (ii) gemäß der allgemeinen Formel A ist Bis-(2,4-di-*tert*-butylphenyl)-pentaerythritol-diphosphit, welches in einer Menge von 600 ppm, bezogen auf das Gesamtgewicht der Polyisocyanatzusammensetzung (i) enthalten ist; und die Zusammensetzung primärer Antioxidantien (iii) enthält als Antioxidans nur BHT, welches in einer Menge von 650 ppm, bezogen auf das das Gesamtgewicht der Polyisocyanatzusammensetzung (i) enthalten ist.

Die Erfindung betrifft weiterhin die Verwendung einer stabilisierten Polyisocyanat-Zusammensetzung, wie zuvor beschrieben, zur Herstellung von Polyurethanen, insbesondere von thermoplastischen Polyurethanen.

### Polyurethan(e)

Die Erfindung betrifft weiterhin ein Polyurethan, erhältlich oder erhalten durch Umsetzung von mindestens den Komponenten (a) und (b) und gegebenenfalls (c):
(a) eine Polyolzusammensetzung;
(b) eine stabilisierte Polyisocyanat-Zusammensetzung wie zuvor beschrieben;
(c) eine Kettenverlängererzusammensetzung.

Die als (b) eingesetzte stabilisierte Polyisocyanat-Zusammensetzung entspricht den zuvor unter "stabilisierte Polyisocyanat-Zusammensetzung" beschriebenen Ausführungsformen und bevorzugten Ausführungsformen.

Gemäß einer Ausführungsform des Polyurethans wie zuvor beschrieben, enthält die Polyolzusammensetzung (a) mindestens ein Polyol ausgewählt aus der Gruppe bestehend aus Polytetrahydrofuran (PTHF), Polyethylenglykol, Polypropylenglykol, Polyadipaten, Polycarbonat(diol)en und Polycaprolactonen.

Gemäß einer Ausführungsform des Polyurethans wie zuvor beschrieben, enthält die Kettenverlängererzusammensetzung (c) mindestens einen Kettenverlängerer ausgewählt aus der Gruppe bestehend aus 1,2-Ethandiol, 1,3-Propandiol, Aminopropanol, 1,4-Butandiol, 1,6-Hexandiol und Hydroxychinon(bis(2-hydroxyethyl))ether (HQEE) .

Das erhaltene oder erhältliche Polyurethan weist bevorzugt einen Gelbheits-Index von weniger als 20, bevorzugt von weniger als 15, weiter bevorzugt von weniger als 10, auf. Die Bestimmung des Gelbheits-Index' erfolgt gemäß ASTM E313.

Weiterhin weist das erhaltene oder erhältliche Polyurethan einen Gehalt an Nonylphenol von weniger als 10ppm, bevorzugt von weniger als 1 ppm, weiter bevorzugt von weniger als 0,1 ppm, auf.

Die Bestimmung des Nonylphenol-Gehalts im PU erfolgt gaschromatographisch mittels Gaschromatographie gekoppelt mit Massenspektrometrie (GC-MS) nach Extraktion mit geeigneten Lösungsmitteln.

Die Erfindung betrifft weiterhin ein Verfahren zur Herstellung eines Polyurethans umfassend die Umsetzung mindestens der Komponenten (a) und (b) und gegebenenfalls (c):
(a) eine Polyolzusammensetzung;
(b) eine stabilisierte Polyisocyanat-Zusammensetzung wie zuvor beschrieben;
(c) eine Kettenverlängererzusammensetzung.

Weiterhin betrifft die Erfindung die Verwendung eines Polyurethans wie zuvor beschrieben oder eines Polyurethans erhalten oder erhältlich nach dem zuvor beschriebenen Verfahren, zur Herstellung von Lebensmittelverpackungen und/oder Textilien, bevorzugt Bekleidung oder Schuhwerk.

Gemäß einer Ausführungsform wird das Polyurethan wie zuvor beschrieben oder das Polyurethan erhalten oder erhältlich nach dem zuvor beschriebenen Verfahren, zur Herstellung von Kabel, Folien, Industrieelementen, Zubehör und/oder Hilfselementen im Automobilbereich, Zubehör und/oder Hilfselementen im Bereich Transportwesen, Zubehör im Sport- oder Freizeitbereich, insbesondere von Kabeln, Spiral- und Pneumatikschläuchen, Folien, Skistiefelschalen, Tierkennzeichnungsmarken, Siebelementen, Schienenunterlagen, Dichtungen, Buchsen, Keilriemen, Faltenbälgen, Anschlagpuffern, Rollenbandagen, Skispitzen, verwendet.

Die vorliegende Erfindung wird durch die folgenden Ausführungsformen und Kombinationen von Ausführungsformen, die sich aus den entsprechenden Rückbezügen und Verweisen ergeben, näher illustriert:
1. Verwendung von Pentaerythritol-diphosphit-Verbindungen gemäß der allgemeinen Formel A zur Stabilisierung von Polyisocyanatzusammensetzungen 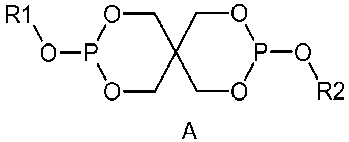 , wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und - C(=O)-NR5R6-Gruppen mit R5 und R6 unabhängig voneinander ausgewählt aus verzweigten oder unverzweigten C1- bis C10-Alkylgruppen.
2. Verwendung von Pentaerythritol-diphosphit-Verbindungen gemäß der allgemeinen Formel A zur Stabilisierung von Polyisocyanatzusammensetzungen nach Ausführungsform 1, wobei die Reste R1, R2 ausgewählt sind aus C6- bis C10-Arylgruppen, wobei mindestens der Rest R1 mindestens einen weiteren Substituenten R3 aufweist, welcher ausgewählt ist aus verzweigten oder unverzweigten C1- bis C10-Alkylgruppen.
3. Verwendung von Pentaerythritol-diphosphit-Verbindungen gemäß der allgemeinen Formel A zur Stabilisierung von Polyisocyanatzusammensetzungen nach Ausführungsform 1 oder 2, wobei die Reste R1, R2 ausgewählt sind aus C6- bis C10-Arylgruppen, wobei der Rest R1 mindestens einen weiteren Substituenten R3 und der Rest R2 mindestens einen weiteren Substituenten R4 aufweist, wobei R3, R4 jeweils unabhängig voneinander ausgewählt sind aus verzweigten oder unverzweigten C3- bis C8-Alkylgruppen.
4. Verwendung von Pentaerythritol-diphosphit-Verbindungen gemäß der allgemeinen Formel A zur Stabilisierung von Polyisocyanatzusammensetzungen nach einer der Ausführungsformen 1 bis 3, wobei die Reste R1, R2 Phenylgruppen sind, wobei mindestens der Rest R1 mindestens einen weiteren Substituenten R3 aufweist, welcher ausgewählt ist aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.
5. Verwendung von Pentaerythritol-diphosphit-Verbindungen gemäß der allgemeinen Formel A zur Stabilisierung von Polyisocyanatzusammensetzungen nach einer der Ausführungsformen 1 bis 4, wobei die Reste R1, R2 Phenylgruppen sind, wobei R1 mindestens einen weiteren Substituenten R3, und R2 mindestens einen weiteren Substituenten R4 aufweist, wobei R3, R4 gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.
6. Verwendung von Pentaerythritol-diphosphit-Verbindungen gemäß der allgemeinen Formel A zur Stabilisierung von Polyisocyanatzusammensetzungen nach einer der Ausführungsformen 1 bis 5, wobei die Reste R1, R2 Phenylgruppen sind und wobei der Rest R1 mindestens zwei gleiche Reste R3, R3'' aufweist, die sich jeweils an der Phenylgruppe R1 in ortho- und para-Position befinden, wobei die mindestens zwei gleichen Reste R3, R3'ausgewählt sind aus verzweigten C3- bis C5-Alkylgruppen, vorzugsweise ausgewählt aus der Gruppe bestehend aus *iso*-Propylgruppe, *tert-*Butylgruppe und *iso*-Pentylgruppe und wobei der Rest R2 mindestens einen Substituenten R4 aufweist, welcher Wasserstoff ist oder gleich ist zu R3.
7. Verwendung von Pentaerythritol-diphosphit-Verbindungen gemäß der allgemeinen Formel A zur Stabilisierung von Polyisocyanatzusammensetzungen nach einer der Ausführungsformen 1 bis 6, wobei die Reste R1, R2 Phenylgruppen sind und wobei jeder Rest R1 mindestens zwei gleiche Reste R3, R3' und jeder Rest R2 mindestens zwei gleiche Reste R4, R4' aufweist, die sich jeweils an den Phenylgruppen R1, R2 in ortho-und para-Position befinden, wobei R3, R3', R4 und R4' gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.
8. Verwendung von Pentaerythritol-diphosphit-Verbindungen gemäß der allgemeinen Formel A zur Stabilisierung von Polyisocyanatzusammensetzungen nach einer der Ausführungsformen 1 bis 7, wobei die Pentaerythritol-diphosphit-Verbindung gemäß der allgemeinen Formel A ausgewählt ist aus der Gruppe bestehend aus Phenyl-(2-*tert-*butylphenyl)-pentaerythritol-diphosphit, Phenyl-(4-*tert*-butylphenyl)-pentaerythritol-diphosphit, Bis-(2-*tert-*butylphenyl)-pentaerythritol-diphosphit, Bis-(4-*tert*-butylphenyl)-pentaerythritol-diphosphit, (2-*tert*-butylphenyl)-(4-*tert*-butylphenyl)-pentaerythritol-diphosphit, Phenyl-(2,4-di-*tert-*butylphenyl)-pentaerythritol-diphosphit, (2-*tert-*Butylphenyl)-(2,4-di-*tert*-butylphenyl)-pentaerythritol-diphosphit, (4-*tert-*Butylphenyl)-(2,4-di-*tert-*butylphenyl)-pentaerythritol-diphosphit, Bis-(2,4-di-*tert*-butylphenyl)-pentaerythritol-diphosphit, vorzugsweise aus der Gruppe bestehend aus Bis-(2-*tert*-butylphenyl)-pentaerythritol-diphosphit, Bis-(4-*tert*-butylphenyl)-pentaerythritol-diphosphit, (2-*tert-*butylphenyl)-(4-*tert*-butylphenyl)-pentaerythritol-diphosphit, (2-*tert-*Butylphenyl)-(2,4-di-*tert*-butylphenyl)-pentaerythritol-diphosphit, (4-*tert-*Butylphenyl)-(2,4-di-*tert-*butylphenyl)-pentaerythritol-diphosphit, Bis-(2,4-di-*tert-*butylphenyl)-pentaerythritol-diphosphit und vorzugsweise Bis-(2,4-di-*tert*-butylphenyl)-pentaerythritol-diphosphit ist.
9. Verwendung von Pentaerythritol-diphosphit-Verbindungen gemäß der allgemeinen Formel A zur Stabilisierung von Polyisocyanatzusammensetzungen nach einer der Ausführungsformen 1 bis 8, wobei eine einzelne Pentaerythritol-diphosphit-Verbindung gemäß der allgemeinen Formel A oder eine Mischung zweier oder mehrerer verschiedener Pentaerythritol-diphosphit-Verbindungen gemäß der allgemeinen Formel A eingesetzt wird, vorzugsweise eine einzelne Pentaerythritol-diphosphit-Verbindung gemäß der allgemeinen Formel A.
10. Verwendung von Pentaerythritol-diphosphit-Verbindungen gemäß der allgemeinen Formel A zur Stabilisierung von Polyisocyanatzusammensetzungen nach einer der Ausführungsformen 1 bis 9, wobei die Polyisocyanatzusammensetzung mindestens ein Polyisocyanat ausgewählt aus den Diisocyanaten, bevorzugt ausgewählt aus der Gruppe bestehend aus Isophorondiisocyanat (IPDI), Toluol-2,4-diisocyanat (TDI), 2,2'-Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldüsocyanat (H12MDI), weiter bevorzugt ausgewählt aus der Gruppe bestehend aus 2,2'-MDI, 2,4'-MDI und 4,4'-MDI, enthält; und weiter bevorzugt die Polyisocyanatzusammensetzung als Polyisocyanat nur 4,4'-MDI enthält.
11. Stabilisierte Polyisocyanat-Zusammensetzung, enthaltend mindestens
   (i) eine Polyisocyanatzusammensetzung;
   (ii) mindestens eine Pentaerythritol-diphosphit-Verbindung gemäß der allgemeinen Formel A 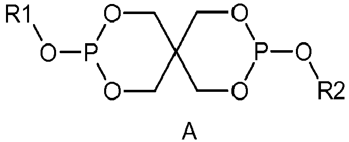 , wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und -C(=O)-NR5R6-Gruppen mit R5 und R6 unabhängig voneinander ausgewählt aus verzweigten oder unverzweigten C1- bis C10-Alkylgruppen.
12. Stabilisierte Polyisocyanat-Zusammensetzung nach Ausführungsform 11, wobei die Polyisocyanatzusammensetzung (i) mindestens ein Polyisocyanat ausgewählt aus den Diisocyanaten, bevorzugt ausgewählt aus der Gruppe bestehend aus Isophorondiisocyanat (IPDI), Toluol-2,4-diisocyanat (TDI), 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldüsocyanat (H12MDI), weiter bevorzugt ausgewählt aus der Gruppe bestehend aus 2,2'-MDI, 2,4'-MDI und 4,4'-MDI, enthält; und weiter bevorzugt die Polyisocyanatzusammensetzung (i) als Polyisocyanat nur 4,4'-MDI enthält.
13. Stabilisierte Polyisocyanat-Zusammensetzung nach Ausführungsform 11 oder 12, wobei die Reste R1, R2 der mindestens einen Pentaerythritol-diphosphit-Verbindung gemäß der allgemeinen Formel A ausgewählt sind aus C6- bis C10-Arylgruppen, wobei mindestens der Rest R1 mindestens einen weiteren Substituenten R3 aufweist, welcher ausgewählt ist aus verzweigten oder unverzweigten C1- bis C10-Alkylgruppen.
14. c, wobei die Reste R1, R2 der mindestens einen Pentaerythritol-diphosphit-Verbindung gemäß der allgemeinen Formel A ausgewählt sind aus C6- bis C10-Arylgruppen, wobei der Rest R1 mindestens einen weiteren Substituenten R3 und der Rest R2 mindestens einen weiteren Substituenten R4 aufweist, wobei R3, R4 jeweils unabhängig voneinander ausgewählt sind aus verzweigten oder unverzweigten C3- bis C8-Alkylgruppen.
15. Stabilisierte Polyisocyanat-Zusammensetzung nach einer der Ausführungsformen 11 bis 13, wobei die Reste R1, R2 der mindestens einen Pentaerythritol-diphosphit-Verbindung gemäß der allgemeinen Formel A Phenylgruppen sind, wobei mindestens der Rest R1 mindestens einen weiteren Substituenten R3 aufweist, welcher ausgewählt ist aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.
16. Stabilisierte Polyisocyanat-Zusammensetzung nach einer der Ausführungsformen 11 bis 15, wobei die Reste R1, R2 der mindestens einen Pentaerythritol-diphosphit-Verbindung gemäß der allgemeinen Formel A Phenylgruppen sind, wobei R1 mindestens einen weiteren Substituenten R3, und R2 mindestens einen weiteren Substituenten R4 aufweist, wobei R3, R4 gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.
17. Stabilisierte Polyisocyanat-Zusammensetzung nach einer der Ausführungsformen 11 bis 16, wobei die Reste R1, R2 der mindestens einen Pentaerythritol-diphosphit-Verbindung gemäß der allgemeinen Formel A Phenylgruppen sind und wobei der Rest R1 mindestens zwei gleiche Reste R3, R3'' aufweist, die sich jeweils an der Phenylgruppe R1 in ortho-und para-Position befinden, wobei die mindestens zwei gleichen Reste R3, R3'ausgewählt sind aus verzweigten C3- bis C5-Alkylgruppen, vorzugsweise ausgewählt aus der Gruppe bestehend aus *iso*-Propylgruppe, *tert-*Butylgruppe und *iso*-Pentylgruppe und wobei der Rest R2 mindestens einen Substituenten R4 aufweist, welcher Wasserstoff ist oder gleich ist zu R3.
18. Stabilisierte Polyisocyanat-Zusammensetzung nach einer der Ausführungsformen 11 bis 17, wobei die Reste R1, R2 der mindestens einen Pentaerythritol-diphosphit-Verbindung gemäß der allgemeinen Formel A Phenylgruppen sind und wobei jeder Rest R1 mindestens zwei gleiche Reste R3, R3' und jeder Rest R2 mindestens zwei gleiche Reste R4, R4' aufweist, die sich jeweils an den Phenylgruppen R1, R2 in ortho- und para-Position befinden, wobei R3, R3', R4 und R4' gleich sind und ausgewählt sind aus verzweigten C3- bis C5-Alkylgruppen, vorzugsweise ausgewählt aus der Gruppe bestehend aus *iso*-Propylgruppe, *tert-*Butylgruppe und *iso-*Pentylgruppe.
19. Stabilisierte Polyisocyanat-Zusammensetzung nach einer der Ausführungsformen 11 bis 18, wobei die mindestens eine Pentaerythritol-diphosphit-Verbindung gemäß der allgemeinen Formel A ausgewählt ist aus der Gruppe bestehend aus Phenyl-(2-*tert-*butylphenyl)-pentaerythritol-diphosphit, Phenyl-(4-*tert-*butylphenyl)-pentaerythritol-diphosphit, Bis-(2-*tert*-butylphenyl)-pentaerythritol-diphosphit, Bis-(4-*tert*-butylphenyl)-pentaerythritol-diphosphit, (2-*tert-*butylphenyl)-(4-*tert-*butylphenyl)-pentaerythritol-diphosphit, Phenyl-(2,4-di-*tert-*butylphenyl)-pentaerythritol-diphosphit, (2-*tert*-Butylphenyl)-(2,4-di-*tert-*butylphenyl)-pentaerythritol-diphosphit, (4-*tert*-Butylphenyl)-(2,4-di-*tert*butylphenyl)-pentaerythritol-diphosphit, Bis-(2,4-di-*tert*-butylphenyl)-pentaerythritol-diphosphit, vorzugsweise aus der Gruppe bestehend aus Bis-(2-*tert*-butylphenyl)-pentaerythritol-diphosphit, Bis-(4-*tert*-butylphenyl)-pentaerythritol-diphosphit, (2*-tert-*butylphenyl)-(4-*tert*-butylphenyl)-pentaerythritol-diphosphit, (2-*tert-*Butylphenyl)-(2,4-di*tert*-butylphenyl)-pentaerythritol-diphosphit, (4-*tert-*Butylphenyl)-(2,4-di-*tert-*butylphenyl)-pentaerythritol-diphosphit, Bis-(2,4-di-*tert-*butylphenyl)-pentaerythritol-diphosphit und vorzugsweise Bis-(2,4-di-*tert-*butylphenyl)-pentaerythritol-diphosphit ist.
20. Stabilisierte Polyisocyanat-Zusammensetzung nach einer der Ausführungsformen 11 bis 19, wobei eine einzelne Pentaerythritol-diphosphit-Verbindung gemäß der allgemeinen Formel A oder eine Mischung zweier oder mehrerer verschiedener Pentaerythritol-diphosphit-Verbindungen gemäß der allgemeinen Formel A eingesetzt wird, vorzugsweise eine einzelne Pentaerythritol-diphosphit-Verbindung gemäß der allgemeinen Formel A.
21. Stabilisierte Polyisocyanat-Zusammensetzung nach einer der Ausführungsformen 11 bis 20, enthaltend zusätzlich eine Zusammensetzung primärer Antioxidantien (iii), welche mindestens ein Antioxidans, ausgewählt aus sterisch gehinderten Phenolen, bevorzugt ausgewählt aus den sterisch gehinderten Phenolen, welche mindestens in ortho-Position benachbart zur OH-Gruppe eine *tert-*Butylgruppe aufweisen, weiter bevorzugt ausgewählt aus der Gruppe bestehend aus Ethylenbis(oxyethylen)bis-(3-(5-*tert-*butyl-4-hydroxy-m-tolyl)-propionat) (Irganox 245 FF), Octadecyl-3-(3,5-di-*tert-*butyl-4-hydroxyphenyl)-propionat (Irganox 1076), Octyl-3,5-di-*tert*-butyl-4-hydroxy-hydrocinnamat (Irganox 1135), N,N'-Hexan-1,6-diylbis[3-(3,5-di-*tert-*butyl-4-hydroxyphenylpropionamid] (Irganox 1098), Pentaerythritol tetrakis(3-(3,5-di-*tert-*butyl-4-hydroxyphenyl)propionat) (Irganox 1010), 3,5-Bis(*tert*-butyl)-4-hydroxytoluol (BHT), enthält; und weiter bevorzugt die Zusammensetzung primärer Antioxidantien (iii) als Antioxidans nur BHT enthält.
22. Stabilisierte Polyisocyanat-Zusammensetzung nach Ausführungsform 21, bestehend zu 98 Gewichts-%, bevorzugt zu 99 Gewichts-%, weiter bevorzugt zu 99,5 Gewichts-%, weiter bevorzugt zu 99,9 Gewichts-%, aus den folgenden Komponenten:
   der Polyisocyanatzusammensetzung (i); mindestens einer Pentaerythritol-diphosphit-Verbindung (ii) gemäß der allgemeinen Formel A; und der Zusammensetzung primärer Antioxidantien (iii).
23. Stabilisierte Polyisocyanat-Zusammensetzung nach einer der Ausführungsformen 11 bis 22, wobei die mindestens eine Pentaerythritol-diphosphit-Verbindung (ii) gemäß der allgemeinen Formel A in einer Menge im Bereich von 1 bis 2000 ppm, bevorzugt in einer Menge im Bereich von 1 bis 1000 ppm, weiter bevorzugt in einer Menge im Bereich von 100 bis 800 ppm, weiter bevorzugt in einer Menge im Bereich von 500 bis 700 ppm, bezogen auf das Gesamtgewicht der Polyisocyanatzusammensetzung (i) enthalten ist.
24. Stabilisierte Polyisocyanat-Zusammensetzung nach einer der Ausführungsformen 21 bis 23, wobei die Zusammensetzung primärer Antioxidantien (iii) in einer Menge von 1 bis 2000 ppm, bevorzugt in einer Menge von 1 bis 1000 ppm, weiter bevorzugt in einer Menge im Bereich von 100 bis 800 ppm, weiter bevorzugt in einer Menge im Bereich von 500 bis 700 ppm, bezogen auf das Gesamtgewicht der Polyisocyanatzusammensetzung (i) enthalten ist.
25. Stabilisierte Polyisocyanat-Zusammensetzung nach einer der Ausführungsformen 21 bis 24, wobei die Polyisocyanatzusammensetzung (i) 4,4'-MDI enthält; die Pentaerythritol-diphosphit-Verbindung (ii) gemäß der allgemeinen Formel A Bis-(2,4-di-*tert*-butylphenyl)-pentaerythritol-diphosphit ist; und die Zusammensetzung primärer Antioxidantien (iii) 3,5-Bis(*tert-*butyl)-4-hydroxytoluol (BHT) enthält.
26. Stabilisierte Polyisocyanat-Zusammensetzung nach einer der Ausführungsformen 21 bis 25, wobei die die Polyisocyanatzusammensetzung (i) als Polyisocyanat nur 4,4'-MDI enthält; die mindestens eine Pentaerythritol-diphosphit-Verbindung (ii) gemäß der allgemeinen Formel A Bis-(2,4-di-*tert-*butylphenyl)-pentaerythritol-diphosphit ist, welches in einer Menge im Bereich von 1 bis 2000 ppm, bevorzugt in einer Menge im Bereich von 1 bis 1000 ppm, weiter bevorzugt in einer Menge im Bereich von 100 bis 800 ppm, weiter bevorzugt in einer Menge im Bereich von 500 bis 700 ppm, bezogen auf das Gesamtgewicht der Polyisocyanatzusammensetzung (i) enthalten ist; und die Zusammensetzung primärer Antioxidantien (iii) als Antioxidans nur BHT enthält, welches in einer Menge von 1 bis 2000 ppm, bevorzugt in einer Menge von 1 bis 1000 ppm, weiter bevorzugt in einer Menge im Bereich von 100 bis 800 ppm, weiter bevorzugt in einer Menge im Bereich von 500 bis 700 ppm, bezogen auf das das Gesamtgewicht der Polyisocyanatzusammensetzung (i), enthalten ist.
27. Stabilisierte Polyisocyanat-Zusammensetzung nach einer der Ausführungsformen 21 bis 26, wobei die Polyisocyanatzusammensetzung (i) als Polyisocyanat nur 4,4'-MDI enthält; die mindestens eine Pentaerythritol-diphosphit-Verbindung (ii) gemäß der allgemeinen Formel Bis-(2,4-di-*tert-*butylphenyl)-pentaerythritol-diphosphit ist, welche in einer Menge von 600 ppm, bezogen auf das Gesamtgewicht der Polyisocyanatzusammensetzung (i) enthalten ist; und die Zusammensetzung primärer Antioxidantien (iii) als Antioxidans nur BHT enthält, welches in einer Menge von 650 ppm, bezogen auf das das Gesamtgewicht der Polyisocyanatzusammensetzung (i) enthalten ist.
28. Verwendung einer stabilisierten Polyisocyanat-Zusammensetzung nach einer der Ausführungsformen 11 bis 27 zur Herstellung von Polyurethanen, insbesondere von thermoplastischen Polyurethanen.
29. Polyurethan erhältlich oder erhalten durch Umsetzung von mindestens den Komponenten (a) und (b) und gegebenenfalls (c):
   (a) eine Polyolzusammensetzung;
   (b) eine stabilisierte Polyisocyanat-Zusammensetzung gemäß einem der Ansprüche 11 bis 27;
   (c) eine Kettenverlängererzusammensetzung.
30. Polyurethan nach Ausführungsform 29, wobei die Polyolzusammensetzung (a) mindestens ein Polyol ausgewählt aus der Gruppe bestehend aus Polytetrahydrofuran (PTHF), Polyethylenglykol, Polypropylenglykol, Polyadipaten, Polycarbonat(diol)en und Polycaprolactonen enthält.
31. Polyurethan nach Ausführungsform 29 oder 30, wobei die Kettenverlängererzusammensetzung (c) mindestens einen Kettenverlängerer ausgewählt aus der Gruppe bestehend aus 1,2-Ethandiol, 1,3-Propandiol, Aminopropanol, 1,4-Butandiol, 1,6-Hexandiol und Hydroxychinon(bis(2-hydroxyethyl))ether (HQEE) enthält.
32. Verfahren zur Herstellung eines Polyurethans umfassend die Umsetzung mindestens der Komponenten (a) und (b) und gegebenenfalls (c):
   (a) eine Polyolzusammensetzung;
   (b) eine stabilisierte Polyisocyanat-Zusammensetzung gemäß einem der Ansprüche 11 bis 27;
   (c) eine Kettenverlängererzusammensetzung.
33. Verwendung eines Polyurethans nach einer der Ausführungsformen 29 bis 31 oder eines Polyurethans erhalten oder erhältlich nach dem Verfahren gemäß Ausführungsform 32, zur Herstellung von Lebensmittelverpackungen und/oder Textilien, bevorzugt Bekleidung oder Schuhwerk.
33. Verwendung eines Polyurethans nach einer der Ausführungsformen 29 bis 31 oder eines Polyurethans erhalten oder erhältlich nach dem Verfahren gemäß Ausführungsform 32, zur Herstellung von Kabel, Folien, Industrieelementen, Zubehör und/oder Hilfselementen im Automobilbereich, Zubehör und/oder Hilfselementen im Bereich Transportwesen, Zubehör im Sport- oder Freizeitbereich, insbesondere von Kabeln, Spiral- und Pneumatikschläuchen, Folien, Skistiefelschalen, Tierkennzeichnungsmarken, Siebelementen, Schienenunterlagen, Dichtungen, Buchsen, Keilriemen, Faltenbälgen, Anschlagpuffern, Rollenbandagen, Skispitzen.

Die vorliegende Erfindung wird durch die folgenden Beispiele näher illustriert.

### Beispiele

### 1. Geräte

Temperaturfühler: Testo 735, Testo GmbH, 65520 Bad Camberg
Gießdosen: Deckeleimer 163*180, HUBER Packaging Group GmbH, 74613 Öhringen
Heizplatte: Ceran 500, Harry Gestigkeit GmbH, 40489 Düsseldorf

### 2. Meßmethoden

### 2.1 Hazen-Farbzahl

Die APHA-Hazen-Farbzahl (Platin-Kobalt-Farbzahl, Pt/Co, kurz Hazen-Farbzahl), wurde gemäß DIN EN 1557 (PRÜFVORSCHRIFT PA-08-04) bestimmt. Hierfür wurde für kolorimetrische Proben in Küvetten, die vorzugsweise auf 50 °C temperiert waren, unter Einsatz eines Farbmessgeräts Lico® 500 (Firma Hach Lange GmbH) mit integrierten Farbskalen die Lichtdurchlässigkeit über das gesamte Spektrum des weißen Lichtes gemessen und dokumentiert, sowie gegen die integrierte Hazen-Farbzahlskala abgeglichen.

### 2.2 Gelbheits-Index

Der Gelbheits-Index wurde gemäß ASTM E313 ermittelt. Verwendet wurde ein Spektralphotometer der Firma Konica Minolta. Gemessen wurden die Lab-Werte, d.h. die einzelnen Farbanteile im Lab-Farbraum, aus denen dann der Gelbheits-Index (YI) per ASTM Methode E313 berechnet wurde.

### 2.3 Nonylphenol-Gehalt

Der Nonylphenol-Gehalt wurde gaschromatographisch mittels GC-MS nach Extraktion aus Spritzgussplatten bestimmt (Intertek Prüflabor)

### 3. Vorbereitungen

Neue Schraubgläser wurden mit Aceton gespült und etikettiert. Das Spülen mit Aceton war erforderlich, sofern die Schaubgläser Verunreinigungen enthielten, die eine vorzeitige Verfärbungen des Polyisocyanats verursachen könnten. Zu Vergleichbarkeitszwecken wurde in allen Fällen, auch wenn keine Verunreinigungen visuell erkennbar waren, gespült.

Am Versuchstag wurden Gießdosen (Weißblechdosen) und Schraubgläser bei 60 °C vorgeheizt.

### 4. Beispiel 1: Herstellung von stabilisierten Polyisocyanat-Lösungen

Die benötigten Mengen an Stabilisatoren wurden in geeigneten Gefäßen, beispielsweise kleinen PE- Bechern, bzw. bei Flüssigkeiten in Spritzen, vorgewogen. Als Polyisocyanat wurde 4,4'-MDI eingesetzt. Das unstabilisierte 4,4'-MDI wurde in der Produktion frisch abgefüllt und unmittelbar für 1h bei 60 °C im Heizschrank aufgeheizt. Als Stabilisator wurde Irgafos 126 und als Vergleichsstabilisator TNPP eingesetzt.

Die Mengen an 4,4'-MDI, BHT und Stabilisator (Irgafos 126 bzw. TNPP) wurden entsprechend der Rezeptur in vorgeheizte Gießdosen eingewogen und jeweils für 2min bei 150U/min gerührt.

Die Rezepturen sind in Tabelle 1 dargestellt.

**Tabelle 1: Rezepturen**

| Probe | 4,4'-MDI (g) | BHT 650ppm (g) | Stabilisator | | | | |
|---|---|---|---|---|---|---|---|
| | | | Irgafos 126 150ppm (g) | Irgafos 126 300ppm (g) | Irgafos 126 500ppm (g) | Irgafos 126 600ppm (g) | TNPP 1050ppm (g) |
| Null-Probe | 2500 | 0 | 0 | 0 | 0 | 0 | 0 |
| 1 | 2500 | 1,625 | 0,375 | 0 | 0 | 0 | 0 |
| 2 | 2500 | 1,625 | 0 | 0,75 | 0 | 0 | 0 |
| 3 | 2500 | 1,625 | 0 | 0 | 1,25 | 0 | 0 |
| 4 | 2500 | 1,625 | 0 | 0 | 0 | 1,5 | 0 |
| Vergleich | 2500 | 1,625 | 0 | 0 | 0 | 0 | 2,63 |

Nach vollständiger Auflösung des Stabilisators, wurden die Mischungen in die entsprechend vorbereiteten und vorgeheizten Schraubgläser gefüllt, fest verschlossen und anschließend für 2h bei 60 °C im Heizschrank gelagert. Die Gießdose mit der restlichen Mischung wurde mit Stickstoff beschleiert, mit Deckel und Spannring verschlossen und ebenfalls für 2h bei 60 °C im Heizschrank gelagert. Hatte sich der Stabilisator nach dem Rühren nicht vollständig gelöst, wurde die Gießdose mit Stickstoff beschleiert, mit Deckel und Spannring verschlossen und die Mischung nochmals für 1 h bei 60 °C im Heizschrank gelagert. Anschließend wurde nochmals für 2min bei 150U/min gerührt und bei Vorliegen einer klaren Lösung in die entsprechenden vorgeheizten Schaubgläsern abgefüllt. Die Gießdose mit der restlichen Mischung wurde mit Stickstoff beschleiert, mit Deckel und Spannring verschlossen und 2h bei 60 °C im Heizschrank gelagert. Als Vergleich wurde eine Probe (Null-Probe), die nur 4,4'-MDI ohne Stabilisator enthielt, den gleichen Bedingungen unterworfen.

Nach den 2h bzw. ca. 3h wurden die Heizschränke mit den Gießdosen und Schraubgläsern auf 50 °C eingestellt. Ebenfalls wurden die ersten Hazen-Farbzahlen gemessen (0 Tage- Wert). Anschließend wurden die Schraubgläser weiterhin im Heizschrank bei 50 °C gelagert. Es wurde nach 1 Tag, 4 Tagen, 7 Tagen, 14 Tagen, 21 Tagen und 28 Tagen die Hazen-Farbzahl bestimmt. Die Ergebnisse für die Vergleichsprobe mit TNPP als Stabilisator und für Probe 3 sowie für die Null-Probe sind in Tabelle 2 gezeigt.

**Tabelle 2: Zeitlicher Verlauf der Hazen-Farbzahlen unterschiedlich stabilisierter MDI-Proben.**

| Zeit (Tage) | Ohne Stabilisierung (Null-Probe) | TNPP 1050 ppm | Irgafos 126 500 ppm |
|---|---|---|---|
| | | Jeweils + 650 ppm BHT | |
| -- | Hazen-Farbzahl | | |
| 0 | 84 | 20 | 32 |
| 1 | 78 | 22 | 32 |
| 4 | 89 | 23 | 30 |
| 7 | 148 | 22 | 32 |
| 14 | 249 | 28 | 32 |
| 21 | 81 | 25 | 30 |
| 28 | 117 | 20 | 20 |

Es ist eindeutig erkennbar, dass der Einsatz des erfindungsgemäßen Stabilisators, hier Irgafos 126, vergleichbar gute Ergebnisse in der Stabilisierung des 4,4'-MDI erzielt wie der Vergleich mit TNPP.

### 5. Beispiel 2: Herstellung von Polyurethan (thermoplastisches Polyurethan, TPU)

Die Polyolkomponenten, hier PolyTHF, und ein Kettenverlängerer, hier 1,4-Butandiol, wurden entsprechend der TPU-Rezeptur aus Tabelle 3 in Gießdosen eingewogen und bei 86 °C für 3h im Heizschrank aufgeheizt. Als Gleitmittel (Entformungshilfsmittel) wurde Distearylethylendiamid (Crodamide EBS in Form von Microbeads) eingesetzt.

**Tabelle 3: TPU-Rezeptur (Handguss-Rezeptur)**

| PolyTHF 1000 (g) | 1,4-Butandiol (g) | Antioxidan s/BHT (g) | Gleitmittel (g) | 4,4'-MDI mit jeweiliger Stabilisierung und BHT (g) | Masse gesamt (g) |
|---|---|---|---|---|---|
| 600 | 182,79 | 7,25 | 0,73 | 660 | 1450,77 |

Für die Handgüsse wurde entsprechend Beispiel 1 eine Isocyanat-/ Stabilisatormischung gemäß Probe 3 (4,4'-MDI mit Irgafos 126 und mit 650 ppm BHT), eine Isocyanat-/ Stabilisatormischung gemäß dem Vergleichsbeispiel (4,4'-MDI mit TNPP und mit 650 ppm BHT), sowie eine Isocyanat-Probe gemäß Null-Probe aus Beispiel 1, jeweils in einem Gefäß vorgewogen und im Heizschrank bei 50°C warmgestellt. Die Gefäße wurden zuvor ausgelitert, d.h. ihr Volumen wurde bestimmt.

Die vorbereitete aufgeheizte Polyolkomponente wurde bei 220U/min gerührt und die Temperatur mit einem in den Gießdosen platzierten Fühler gemessen. Kettenverlängerer und Antioxidans sowie Gleitmittel wurden zugegeben. Nach Zugabe der Additive wurden die Gießdosen mit Stickstoff beschleiert. Als die Mischungen auf 80 °C abgekühlt waren, wurde jeweils einer Gießdose die Isocyanat-/ Stabilisatormischung gemäß Probe 3 (4,4'-MDI mit Irgafos 126 und mit 650 ppm BHT), die Isocyanat-/ Stabilisatormischung gemäß dem Vergleichsbeispiel (4,4'-MDI mit TNPP und mit 650 ppm BHT), sowie die Isocyanat-Probe gemäß Null-Probe aus Beispiel 1 hinzugegeben und über Rückwaage die erforderlichen Einwaagen kontrolliert. Die Reaktionstemperatur begann zu steigen; der Temperatur-Zeit-Verlauf wurde mit einem Temperaturmessgerät aufgenommen. Bei 110 °C wurde das jeweilige Reaktionsgemisch in eine Teflonschale in einer zuvor auf 125 °C aufgeheizten Heizplatte (diese besaß die Form der Teflonschale) gegossen. Nach 10 min Reaktionszeit wurde das jeweilige Roh-TPU für 15h bei 80 °C im Heizschrank zur vollständigen Ausbildung der Hartphase getempert. Nach dem Tempern erfolgte die Granulierung und Verarbeitung durch Spritzguss, die erhaltenen Spritzplatten wurden bei 100 °C für 20 Stunden getempert. Tabelle 4 zeigt für alle drei Proben die anschließend bestimmten Gelbheits-Indizes.

**Tabelle 4: Daten im TPU, hergestellt aus 4,4'-MDI mit obigen Stabilisierungen.**

| | Ohne Stabilisierung (Null-Probe) | 1050 ppm TNPP | 500 ppm Irgafos 126 |
|---|---|---|---|
| | | Jeweils + 650 ppm | BHT |
| Gelbheits-Index getemperte Spritzplatte | 11 | 7 | 6 |
| Nonylphenol-Gehalt (ppm) | 0 | 76 | 0 |

Es ist deutlich zu erkennen, dass das mit Irgafos 126 stabilisierte TPU einen dem mit TNPP stabilisierten TPU vergleichbar guten Gelbheits-Index ergibt, d.h. das mit Irgafos 126 stabilisierte TPU ist deutlich weniger durch gelbe Verfärbung beeinträchtigt als das vergleichbare TPU ohne jedweden Stabilisator (Null-Probe). Weiterhin enthält das Irgafos 126 stabilisierte TPU keine schädlichen SVHCs wie beispielsweise Nonylphenol, im Gegensatz zum mit TNPP stabilisierten TPU.

## Patentansprüche

1. Verwendung von Pentaerythritol-diphosphit-Verbindungen gemäß der allgemeinen Formel A zur Stabilisierung von Polyisocyanatzusammensetzungen 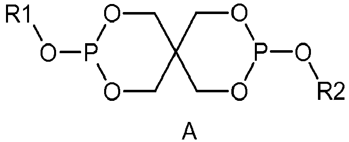 , wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und - C(=O)-NR5R6-Gruppen mit R5 und R6 unabhängig voneinander ausgewählt aus verzweigten oder unverzweigten C1- bis C10-Alkylgruppen.

2. Verwendung von Pentaerythritol-diphosphit-Verbindungen gemäß der allgemeinen Formel A zur Stabilisierung von Polyisocyanatzusammensetzungen nach Anspruch 1, wobei die Reste R1, R2 ausgewählt sind aus C6- bis C10-Arylgruppen, wobei mindestens der Rest R1 mindestens einen weiteren Substituenten R3 aufweist, welcher ausgewählt ist aus verzweigten oder unverzweigten C1- bis C10-Alkylgruppen.

3. Verwendung von Pentaerythritol-diphosphit-Verbindungen gemäß der allgemeinen Formel A zur Stabilisierung von Polyisocyanatzusammensetzungen nach einem der Ansprüche 1 oder 2, wobei die Pentaerythritol-diphosphit-Verbindung gemäß der allgemeinen Formel A ausgewählt ist aus der Gruppe bestehend aus Phenyl-(2-*tert-*butylphenyl)-pentaerythritol-diphosphit, Phenyl-(4-*tert-*butylphenyl)-pentaerythritol-diphosphit, Bis-(2-*tert*-butylphenyl)-pentaerythritol-diphosphit, Bis-(4-*tert*-butylphenyl)-pentaerythritol-diphosphit, (2*-tert-*butytphenyt)-(4-*tert*-butytphenyl)-pentaerythritol-diphosphit, Phenyl-(2,4-di-*tert*butylphenyl)-pentaerythritol-diphosphit, (2-*tert-*Butylphenyl)-(2,4-di-*tert-*butylphenyl)-pentaerythritol-diphosphit, (4-*tert*-Butylphenyl)-(2,4-di-*tert*-butylphenyl)-pentaerythritol-diphosphit, Bis-(2,4-di-*tert-*butylphenyl)-pentaerythritol-diphosphit, vorzugsweise aus der Gruppe bestehend aus Bis-(2-*tert*-butylphenyl)-pentaerythritol-diphosphit, Bis*-*(4*-tert*butylphenyl)-pentaerythritol-diphosphit, (2-*tert*-butylphenyl)-(4-*tert*-butylphenyl)-pentaerythritol-diphosphit, (2-*tert*-Butylphenyl)-(2,4-di-*tert-*butylphenyl)-pentaerythritol-diphosphit, (4-*tert*-Butylphenyl)-(2,4-di-*tert*-butylphenyl)-pentaerythritol-diphosphit, Bis-(2,4-di-*tert*-butylphenyl)-pentaerythritol-diphosphit und vorzugsweise Bis-(2,4-di-*tert*butylphenyl)-pentaerythritol-diphosphit ist.

4. Verwendung von Pentaerythritol-diphosphit-Verbindungen gemäß der allgemeinen Formel A zur Stabilisierung von Polyisocyanatzusammensetzungen nach einem der Ansprüche 1 bis 3, wobei eine einzelne Pentaerythritol-diphosphit-Verbindung gemäß der allgemeinen Formel A oder eine Mischung zweier oder mehrerer verschiedener Pentaerythritol-diphosphit-Verbindungen gemäß der allgemeinen Formel A eingesetzt wird, vorzugsweise eine einzelne Pentaerythritol-diphosphit-Verbindung gemäß der allgemeinen Formel A.

5. Verwendung von Pentaerythritol-diphosphit-Verbindungen gemäß der allgemeinen Formel A zur Stabilisierung von Polyisocyanatzusammensetzungen nach einem der Ansprüche 1 bis 4, wobei die Polyisocyanatzusammensetzung mindestens ein Polyisocyanat ausgewählt aus den Diisocyanaten, bevorzugt ausgewählt aus der Gruppe bestehend aus Isophorondiisocyanat (IPDI), Toluol-2,4-diisocyanat (TDI), 2,2'-Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldüsocyanat (H12MDI), weiter bevorzugt ausgewählt aus der Gruppe bestehend aus 2,2'-MDI, 2,4'-MDI und 4,4'-MDI, enthält; und weiter bevorzugt die Polyisocyanatzusammensetzung als Polyisocyanat nur 4,4'-MDI enthält.

6. Stabilisierte Polyisocyanat-Zusammensetzung, enthaltend mindestens
(i) eine Polyisocyanatzusammensetzung;
(ii) mindestens eine Pentaerythritol-diphosphit-Verbindung gemäß der allgemeinen Formel A 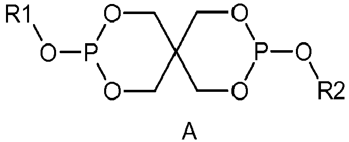 , wobei die Reste R1, R2 gleich oder verschieden sind und jeweils unabhängig voneinander ausgewählt sind aus C6- bis C15-Arylgruppen und C3- bis C15-Alkylgruppen, wobei der Rest R1 die Reste R3 und R3' aufweist und der Rest R2 die Reste R4 und R4' aufweist, wobei R3, R3', R4, R4' gleich oder verschieden sind und jeweils unabhängig voneinander ausgewählt sind aus Wasserstoff, verzweigten oder unverzweigten C1- bis C10-Alkylgruppen, verzweigten oder unverzweigten C1-C10-Alkoxygruppen, verzweigten oder unverzweigten -O-C(=O)-C1-C10-Alkylgruppen und -C(=O)-NR5R6-Gruppen mit R5 und R6 unabhängig voneinander ausgewählt aus verzweigten oder unverzweigten C1- bis C10-Alkylgruppen.

7. Stabilisierte Polyisocyanat-Zusammensetzung nach Anspruch 6, wobei die Polyisocyanatzusammensetzung (i) mindestens ein Polyisocyanat ausgewählt aus den Diisocyanaten, bevorzugt ausgewählt aus der Gruppe bestehend aus Isophorondiisocyanat (IPDI), Toluol-2,4-diisocyanat (TDI), 2,2'- Diphenylmethandiisocyanat (2,2'-MDI), 2,4'- Diphenylmethandiisocyanat (2,4'-MDI), 4,4'-Diphenylmethandiisocyanat (4,4'-MDI), Hexamethylen-1,6-diisocyanat (HDI) und 4,4'-, 2,4'- und 2,2'-Methylendicyclohexyldüsocyanat (H12MDI), weiter bevorzugt ausgewählt aus der Gruppe bestehend aus 2,2'-MDI, 2,4'-MDI und 4,4'-MDI, enthält; und weiter bevorzugt die Polyisocyanatzusammensetzung (i) als Polyisocyanat nur 4,4'-MDI enthält.

8. Stabilisierte Polyisocyanat-Zusammensetzung nach Anspruch 6 oder 7, enthaltend zusätzlich eine Zusammensetzung primärer Antioxidantien (iii), welche mindestens ein Antioxidans, ausgewählt aus sterisch gehinderten Phenolen, bevorzugt ausgewählt aus den sterisch gehinderten Phenolen, welche mindestens in ortho-Position benachbart zur OH-Gruppe eine *tert*-Butylgruppe aufweisen, weiter bevorzugt ausgewählt aus der Gruppe bestehend aus Ethylenbis(oxyethylen)bis-(3-(5-*tert-*butyl-4-hydroxy-m-tolyl)-propionat), Octadecyl-3-(3,5-di-*tert-*butyl-4-hydroxyphenyl)-propionat, Octyl-3,5-di-*tert-*butyl-4-hydroxy-hydrocinnamat, N,N'-Hexan-1,6-diylbis[3-(3,5-di-*tert-*butyl-4-hydroxyphenylpropionamid], Pentaerythritol tetrakis(3-(3,5-di-*tert-*butyl-4-hydroxyphenyl)propionat), 3,5-Bis(*tert*-butyl)-4-hydroxytoluol (BHT), enthält; und weiter bevorzugt die Zusammensetzung primärer Antioxidantien (iii) als Antioxidans nur BHT enthält.

9. Stabilisierte Polyisocyanat-Zusammensetzung nach einem der Ansprüche 6 bis 8, wobei die Polyisocyanatzusammensetzung (i) als Polyisocyanat nur 4,4'-MDI enthält; die mindestens eine Pentaerythritol-diphosphit-Verbindung (ii) gemäß der allgemeinen Formel Bis-(2,4-di-*tert-*butylphenyl)-pentaerythritol-diphosphit ist, welche in einer Menge von 600 ppm, bezogen auf das Gesamtgewicht der Polyisocyanatzusammensetzung (i) enthalten ist; und die Zusammensetzung primärer Antioxidantien (iii) als Antioxidans nur BHT enthält, welches in einer Menge von 650 ppm, bezogen auf das das Gesamtgewicht der Polyisocyanatzusammensetzung (i) enthalten ist.

10. Verwendung einer stabilisierten Polyisocyanat-Zusammensetzung nach einem der Ansprüche 6 bis 9 zur Herstellung von Polyurethanen, insbesondere von thermoplastischen Polyurethanen.

11. Polyurethan erhältlich oder erhalten durch Umsetzung von mindestens den Komponenten (a) und (b) und gegebenenfalls (c):
(a) eine Polyolzusammensetzung;
(b) eine stabilisierte Polyisocyanat-Zusammensetzung gemäß einem der Ansprüche 6 bis 9;
(c) eine Kettenverlängererzusammensetzung.

12. Polyurethan nach Anspruch 11, wobei die Polyolzusammensetzung (a) mindestens ein Polyol ausgewählt aus der Gruppe bestehend aus Polytetrahydrofuran (PTHF), Polyethylenglykol, Polypropylenglykol, Polyadipaten, Polycarbonat(diol)en und Polycaprolactonen enthält und wobei die Kettenverlängererzusammensetzung (c) mindestens einen Kettenverlängerer ausgewählt aus der Gruppe bestehend aus 1,2-Ethandiol, 1,3-Propandiol, Aminopropanol, 1,4-Butandiol, 1,6-Hexandiol und Hydroxychinon(bis(2-hydroxyethyl))ether (HQEE) enthält.

13. Verfahren zur Herstellung eines Polyurethans umfassend die Umsetzung mindestens der Komponenten (a) und (b) und gegebenenfalls (c):
(a) eine Polyolzusammensetzung;
(b) eine stabilisierte Polyisocyanat-Zusammensetzung gemäß einem der Ansprüche 6 bis 9;
(c) eine Kettenverlängererzusammensetzung.

14. Verwendung eines Polyurethans nach Anspruch 11 oder eines Polyurethans erhalten oder erhältlich nach dem Verfahren gemäß Anspruch 13, zur Herstellung von Lebensmittelverpackungen und/oder Textilien, bevorzugt Bekleidung oder Schuhwerk.

15. Verwendung eines Polyurethans nach Anspruch 11 oder eines Polyurethans erhalten oder erhältlich nach dem Verfahren gemäß Anspruch 13, zur Herstellung von Kabel, Folien, Industrieelementen, Zubehör und/oder Hilfselementen im Automobilbereich, Zubehör und/oder Hilfselementen im Bereich Transportwesen, Zubehör im Sport- oder Freizeitbereich, insbesondere von Kabeln, Spiral- und Pneumatikschläuchen, Folien, Skistiefelschalen, Tierkennzeichnungsmarken, Siebelementen, Schienenunterlagen, Dichtungen, Buchsen, Keilriemen, Faltenbälgen, Anschlagpuffern, Rollenbandagen, Skispitzen.
